# EUROPÄISCHE PATENTSCHRIFT

(11) **EP 3 997 424 B1**
(45) Veröffentlichungstag und Bekanntmachung des Hinweises auf die Patenterteilung: **23.11.2022**
(21) Anmeldenummer: 21724533.1
(22) Anmeldetag: 29.04.2021
(51) Int. Cl.: G01F 25/10, G01F 1/84

(54) **MESSSYSTEM ZUR MESSUNG EINES DURCHFLUSSES**
MEASURING SYSTEM FOR MEASURING A FLOW
SYSTÈME DE MESURE POUR MESURER UN ÉCOULEMENT

(30) Priorität: 30.04.2020 AT 503732020
(43) Veröffentlichungstag der Anmeldung: 18.05.2022
(73) Patentinhaber: AVL List GmbH, 8020 Graz (AT)
(72) Erfinder: BUCHNER, Michael, 8010 Graz (AT)
(74) Vertreter: terpatent Patentanwälte ter Smitten Eberlein-Van Hoof Rütten Daubert
(86) Internationale Anmeldenummer: PCT/AT2021/060152
(87) Internationale Veröffentlichungsnummer: WO 2021/217195

(56) Entgegenhaltungen:
- WO-A1-2019/006485
- DE-A1-102016 201 933
- DE-B4-102016 201 933
- US-A1- 2004 163 459
- US-A1- 2018 275 697
- US-B2- 7 677 093

## Beschreibung

Die Erfindung betrifft ein Messsystem zur Messung eines Durchflusses mit einer Versorgungseinheit, welche einen Medienanschluss und einen Spülgasanschluss und/oder einen Inertgas- oder Druckluftanschluss aufweist, einer Messeinheit mit zumindest einem Durchflussmesser und zumindest einem ansteuerbaren Ventil, die mit der Versorgungseinheit zur wahlweisen Einleitung eines Medienstroms oder eines Spülgasstroms fluidisch verbunden ist und über die ein Durchfluss messbar ist, einer Ausgangsdruckregeleinheit mit zumindest einem Auslassdrucksensor und einem Ventil, die mit der Messeinheit fluidisch verbunden ist und über welche die Messeinheit mit dem Verbraucher verbindbar ist, und einer Hauptleitung, die mit dem Medienanschluss verbunden ist und über die die Versorgungseinheit, die Messeinheit und die Ausgangsdruckregeleinheit fluidisch verbunden sind.

Derartige Messsysteme und zugehörige Messverfahren werden in einer Vielzahl von Anlagen genutzt, in denen Aussagen zu den in der Anlage vorhandenen Durchflüssen, welche Volumenströme oder Massenströme sein können, erforderlich sind. Mit den verwendeten Messgeräten können sowohl die Durchflüsse von Flüssigkeiten als auch von Gasen in den entsprechenden Leitungen gemessen werden. Ein Beispiel für eine Durchflussmessung ist die Verwendung einer derartigen Anordnung zur Verbrauchsmessung von Kraftstoffen in Kraftfahrzeugen, wie Diesel oder Benzin aber auch Wasserstoff.

Bei den bekannten Verbrauchsmesssystemen werden Coriolis-Messgeräte verwendet, da diese eine hohe Genauigkeit bei einphasigen Strömungen aufweisen und auch geeignet sind, Strömungsgeschwindigkeiten und Durchflüsse gasförmiger Medien zu messen. Diese Messgeräte erreichen immer nur in einem bestimmten Durchflussbereich ausreichend genaue Messergebnisse. Aus diesem Grund sind Messgeräte bekannt geworden, bei denen mehrere unterschiedlich große Coriolis-Messgeräte miteinander kombiniert werden.

Zusätzlich ist es bekannt, dass die Coriolis-Messgeräte mit Druckreglern in einer Messeinheit kombiniert werden und zwischen den beiden unterschiedlich großen Coriolis-Messgeräten hin- und hergeschaltet werden kann, indem zumindest eines dieser Messgeräte über einen Bypass, in dem ein Ventil angeordnet ist, umgangen werden kann. Eine solche Messeinheit ist beispielsweise aus der WO 2016/206983 A1 bekannt. Das Medium gelangt über einen Einlassanschluss in die Messeinheit und die Hauptleitung. Anschließend wird es in einer Konditioniereinheit temperiert und an einem ersten Druckregler auf einen gewünschten Entspannungsdruck entspannt. Anschließend werden die Coriolis-Messgeräte durchströmt, mit denen der Durchfluss gemessen wird. Stromabwärts dieser Messgeräte ist ein zweiter Druckregler angeordnet, mit dem der Ausgangsdruck eingestellt wird. Dies erfolgt, indem am Ausgang der Verbrauchsmesseinrichtung ein Auslassdrucksensor vorgesehen wird, der den Ausgangsdruck erfasst und einer Regelungseinheit zuführt, die den Ausgangsdruckregler hinter den Coriolis-Messgeräten ansteuert. Über einen Ausgangsanschluss wird das konditionierte Medium entnommen und einem Verbraucher zugeführt. Das Messsystem weist zusätzlich einen Inertgasanschluss auf, über den das Inertgas zum Spülen in das Messsystem einleitbar ist.

Nachteilig an einem solchen System ist jedoch, dass es sich herausgestellt hat, dass Messfehler auftreten, wenn der Verbraucher extremen Druck- und Temperaturbedingungen ausgesetzt ist, wie dies auf einem Teststand beispielsweise in Klimakammern simuliert wird.

Es ist daher Aufgabe der Erfindung, ein Messsystem zur Messung eines Durchflusses zur Verfügung zu stellen, mit dem genaue Messwerte auch für den Fall erzielt werden können, dass der Verbraucher extremen klimatischen Bedingungen ausgesetzt ist, wobei gleichzeitig der apparative Aufwand möglichst gering gehalten werden soll. Des Weiteren soll die Nutzung und Wartung des Systems möglichst einfach sein und eine ausreichende Flexibilität ermöglichen.

Diese Aufgabe wird durch ein Messsystem zur Messung eines Durchflusses mit den Merkmalen des Anspruchs 1 gelöst.

Das erfindungsgemäße Messsystem besteht aus drei Einheiten und zwar einer Versorgungseinheit, die die Bauteile zur Versorgung und Steuerung beinhaltet und welche einen Medienanschluss und einen Inertgasanschluss aufweist, einer Messeinheit, mit zumindest einem Durchflussmesser, wie einem Coriolis-Messgerät, über das der Durchfluss in einer Hauptleitung messbar ist, die mit dem Medienanschluss verbunden ist, und einer Ausgangsdruckregeleinheit mit zumindest einem Auslassdrucksensor, über den der Auslassdruck des Messsystems gemessen wird. Diese Einheiten können als separate Module ausgebildet werden. Die Messeinheit weist zumindest ansteuerbare Ventile zum Verschließen oder Öffnen der Hauptleitung in der Messeinheit und oder einen Druckregler zum Regeln des Druckes in der Hauptleitung, auf. Diese Ventile können insbesondere pneumatisch betätigt werden. Die Messeinheit ist mit der Versorgungseinheit zur wahlweisen Einleitung eines Messmedienstroms oder eines Inertgasstroms fluidisch verbunden. Die Ausgangsdruckregeleinheit weist neben dem Auslassdrucksensor ebenfalls ansteuerbare Ventile zur Regelung des Medienstromes auf und ist mit der Messeinheit fluidisch verbunden. Des Weiteren ist die Ausgangsdruckregeleinheit mit dem Verbraucher fluidisch verbindbar, so dass die Messeinheit über die Ausgangsdruckregeleinheit mit dem Verbraucher verbunden werden kann. Diese Verbindung erfolgt über die Hauptleitung, die sich vom mit einer Messmedienquelle verbundenen Medieneinlass in die Versorgungseinheit und über die Messeinheit und die Ausgangsdruckregeleinheit zum Auslass erstreckt.

Erfindungsgemäß sind die Versorgungseinheit und die Messeinheit in einem Gehäuse angeordnet und die Ausgangsdruckregeleinheit ist in einem separaten Gehäuse, getrennt vom Gehäuse der Messeinheit angeordnet. Dabei sind die ansteuerbaren Ventile und Druckregler der Messeinheit und der Ausgangsdruckregeleinheit mit der Versorgungseinheit zum Ansteuern der Ventile und Druckregler über Leitungen verbunden. Diese Leitungen können somit entweder pneumatische, hydraulische oder elektrische Leitungen sein. Durch diese Ausbildung kann die Ausgangsdruckregeleinheit und damit der Auslassdrucksensor unmittelbar am Verbraucher positioniert werden, ohne dass die Wärme oder kälteempfindlichen Bauteile der Messeinheit entsprechenden Bedingungen ausgesetzt werden müssen. Hierbei sind Abstände von bis etwa 10m realisierbar. Entsprechend werden sehr genaue Messergebnisse erzielt und gleichzeitig eine lange Haltbarkeit der Messeinheit sichergestellt, ohne dass der apparative Aufwand vergrößert werden muss. Stattdessen kann die sehr kleine Ausgangsdruckregeleinheit problemlos auch in den kleinen vorhandenen Klimakammern untergebracht werden. Durch diese Ausführung wird somit ein hohes Maß an Flexibilität erreicht und es können unterschiedliche Medien gemessen werden.

Vorzugsweise ist die Ausgangsdruckregeleinheit beabstandet zur Messeinheit angeordnet ist und ausschließlich über die Hauptleitung unmittelbar mit der Messeinheit verbunden. Entsprechend besteht ein räumlicher Abstand zwischen der Messeinheit mit ihren wärmeempfindlichen Bauteilen und der Ausgangsdruckregeleinheit, die auch großer Hitze oder Kälte ausgesetzt werden kann und direkt am Verbraucher bei den gleichen klimatischen Bedingungen den Druck über den Auslassdrucksensor aufnehmen kann. Eine Rückmeldung des Auslassdrucksensors zur Ansteuerung des Ausgangsdruckreglers der Messeinheit erfolgt über eine Steuereinheit.

Die Ausgangsdruckregeleinheit ist vorteilhafterweise auch beabstandet zur Versorgungseinheit angeordnet und mit dieser ausschließlich über die Hauptleitung, pneumatische Steuerleitungen und zumindest eine elektrische Leitung verbunden, wobei die elektrische Leitung den Auslassdrucksensor mit einer Steuereinheit der Versorgungseinheit verbindet. Die gesamte elektrische Ansteuerung und pneumatische Versorgung der Ausgangsdruckregeleinheit wird entsprechend über die Versorgungseinheit über Entfernung realisiert.

Somit kann die Ausgangsdruckregeleinheit mit dem Verbraucher in einem Klimaraum angeordnet werden und die Messeinheit und die Versorgungseinheit außerhalb des Klimaraumes angeordnet sein. So können auf einfache Weise im Labor unterschiedlichste klimatische Bedingungen nachgestellt werden, ohne dass daraus resultierende Messfehler in Kauf genommen werden müssen.

Vorzugsweise weist die Versorgungseinheit eine Ventilleiste mit mehreren Elektromagnetventilen auf, die jeweils über eine pneumatische Steuerleitung mit den ansteuerbaren Ventilen der Versorgungseinheit, der Messeinheit und der Ausgangsdruckregeleinheit verbunden sind und die elektrisch mit der Steuereinheit verbunden sind. Durch Bestromung der Elektromagnetventile in der Versorgungseinheit können entsprechend rein pneumatisch die Ventile und Druckregler der Messeinheit, der Ausgangsdruckregeleinheit und der Versorgungseinheit angesteuert werden. Eine solche pneumatische Betätigung ist temperaturunempfindlich, so dass lediglich die Versorgungseinheit mit der dort vorhandenen empfindlichen Elektrik nicht großer Hitze ausgesetzt werden darf.

In einer hierzu weiterführenden Ausführungsform ist der Inertgas- oder Druckluftanschluss der Versorgungseinheit mit der Ventilleiste über eine Inertgas- oder Druckluftleitung verbunden, in der ein Inertgas- oder Luftdruckregler und ein Einlassdrucksensor angeordnet sind. Somit kann über den Inertgasdruckregler aufgrund der Rückmeldung des Drucksensors der korrekte Druck zum Schalten oder Regeln der Ventile eingestellt werden und sichergestellt werden, dass ein ausreichender Druck zum Schalten über die Elektromagnetventile zur Verfügung gestellt werden kann.

Die Versorgungseinheit weist vorteilhafterweise ein Dämpfungselement auf, welches ein erstes Schaltventil in der Hauptleitung aufweist und eine Bypassleitung aufweist, über die das erste Schaltventil umgehbar ist und in der ein zweites Schaltventil und eine Drossel angeordnet sind. Dieses Dämpfungselement verhindert einen plötzlichen starken Druckanstieg beim Einschalten des Messsystems, was zu Schäden an den folgenden Aggregaten, insbesondere an folgenden Druckreglern führen könnte. Hierzu wird beim Anschalten des Messsystems das Medium zunächst über die Drossel geführt, indem die Hauptleitung durch das Ventil verschlossen wird. So erfolgt aufgrund der Drossel ein allmählicher Druckanstieg bis die Ventile umgeschaltet werden und die Hauptleitung wieder durchströmt wird.

Auch ist es vorteilhaft, wenn die Versorgungseinheit einen in der Hauptleitung angeordneten Eingangsdrucksensor aufweist, in Abhängigkeit dessen ein erster Ausgangsdruckregler, welcher vor dem Durchflussmesser der Messeinheit in der Hauptleitung angeordnet ist, geregelt ist. Durch diese Anordnung können auftretende Pulsationen stromabwärts des Druckreglers und damit an den Durchflussmessern verhindert werden. Wenn beispielweise ein plötzlicher Verbrauchssprung auftritt, kann der Druck am Drucksensor um bis zu 1 bar fallen oder steigen. Aufgrund der Hysterese der Pumpe entsteht eine zusätzliche Druckdifferenz von etwa 0,3 bar, so dass insgesamt ein Druckabfall von etwa 1,3 bar am Eingangsdrucksensor auftritt, was zu Messwertfehlern führen würde. Entsprechend wird der Ausgangsdruckregler vor den Durchflussmessern auf einen Druck eingestellt, der mehr als diese 1,3 bar, beispielsweise 2 bar unter dem Versorgungsdruck des Messsystems liegt, wodurch sich Pulsationen nicht weiter im System ausbreiten. Durch eine derartige Anordnung kann somit darauf verzichtet werden, dass der Versorgungsdruck konstant sein muss, um zuverlässige Messwerte zu erhalten, da solange der Versorgungsdruck nicht unterhalb des Auslassdrucks des Messsystems sinkt, konstante Druckbedingungen vor den Coriolis-Messgeräten eingestellt werden können.

Des Weiteren weist die Versorgungseinheit vorzugsweise eine Spülgaszuleitung auf, die von einem Spülgasanschluss zur Hauptleitung führt und in der ein erstes Spülgasventil, ein erstes Rückschlagventil und ein Spülgasdrucksensor angeordnet sind. Somit kann das Messsystem auf einfache Weise gespült werden, wobei durch den Spülgasdrucksensor sichergestellt wird, dass ein ausreichender Spülgasdruck vorhanden ist. Das Spülgasventil dient zum Verschluss und zur Öffnung der Spülgasleitung, während das Rückschlagventil sicherstellt, dass kein anderes Medium aus der Hauptleitung in die Spülgasleitung strömen kann.

Im weiteren Verlauf weist die Versorgungseinheit eine Versorgungseinheitsspülgasableitung auf, die stromaufwärts der Messeinheit von der Hauptleitung abzweigt und an einem ersten Spülgasauslassanschluss mündet, wobei in der Versorgungseinheitsspülgasableitung ein zweites Spülgasventil und ein zweites Rückschlagventil angeordnet sind. Entsprechend kann der Bereich stromaufwärts der Messeinheit separat gespült werden. Ein Eindringen von Gas über den Auslassanschluss wird durch das Rückschlagventil verhindert. Dabei kann das Rückschlagventil oder die Versorgungseinheitsspülgasableitung so klein dimensioniert werden, dass eine Durchflussbegrenzung durch die vorhandene Drosselwirkung erzielt wird.

Zusätzlich weist die Versorgungseinheit einen Verbindungsanschluss auf, über den in die Hauptleitung eine Zusatzeinheit schaltbar ist. Diese Zusatzeinheit kann beispielsweise ein Vorheizer sein, durch den verhindert wird, dass bei der nachfolgenden Entspannung über den ersten Ausgangsdruckregler der Messeinheit eine Abkühlung des Mediums erfolgt, welche außerhalb der Spezifikation liegt. Der Verbindungsanschluss kann jedoch auch mit einem Massenfluss-Kalibriergerät verbunden werden oder über den Anschluss Proben entnommen werden. Auch ist es möglich, durch Anschluss eines zusätzlichen Druckreglers den zulässigen Druckbereich des Messsystems zu erweitern. Dieser Druckregler ist dann jedoch nicht immer angeschlossen, wodurch unerwünschte Druckverluste in Normaldruckbereichen vermieden werden.

Vorzugsweise ist in der Hauptleitung der Messeinheit ein zweiter Ausgangsdruckregler, ein erstes Coriolis-Messgerät und ein zweites Coriolis-Messgerät, welches stromabwärts des ersten Coriolis-Messgeräts in der Hauptleitung angeordnet ist und über eine Bypassleitung umgehbar ist, in der ein Ventil angeordnet ist. So kann der Druck stromabwärts des Ausgangsdruckreglers auf einen beliebigen, insbesondere einen konstanten Wert eingestellt werden. Entsprechend kann die folgende Leitung, die zum Verbraucher führt, eine beinahe beliebige Länge aufweisen, ohne dass Massenverbrauchsmessfehler entstehen, wodurch die Ausgangsdruckregeleinheit in Entfernung zur Messeinheit angeordnet werden kann. Lediglich die Leitung zwischen der Messeinheit und dem zweiten Ausgangsdruckregler weist bei dieser Ausführung einen nicht konstanten Druck auf, der zu einer nicht konstanten Masse in diesem Leitungsabschnitt bei kompressiblen Medien führt. Dieser kann jedoch in seiner Länge problemlos minimiert werden, so dass sehr genaue Messergebnisse erreicht werden. Zusätzlich ergibt sich die Möglichkeit, Bedingungen mit sich ändernden Druckverhältnissen nachzustellen, wie diese beispielsweise am Fahrzeug bei einem sich leerenden Tank mit fallendem Druck auftreten. Selbstverständlich ist hierzu der Druck in der Hauptleitung zwischen der Versorgungseinheit und der Messeinheit größer zu wählen als der Druck am Auslass der Auslassdruckregeleinheit und damit am Verbraucher. Zusätzlich kann man mithilfe des Druckreglers auch den Massenstrom limitieren und so bei Überschreiten eines zulässigen Massenstromlimits an der Brennstoffzelle durch Reduzierung des Drucks wieder einen zulässigen Massenstrom erzeugen. Der zweite Auslassdruckregler kommuniziert entsprechend mit dem Auslassdrucksensor der Auslassdruckregeleinheit über die Steuereinheit, wodurch der Auslassdruck sehr genau eingestellt und geregelt werden kann.

Vorzugsweise ist der Ausgangsdruckregler unmittelbar stromabwärts der Messeinheit angeordnet und auf einen konstanten Sollwert oder entlang einer Sollwert-Kennlinie regelbar, so dass die Leitungslänge zwischen der Messeinheit und dem Ausgangsdruckregler minimiert wird und damit auch der Fehler der Messung durch die in der Leitung vorhandene nicht konstante Masse minimiert wird. Durch die verschiedenen Kennlinien können verschiedene Zustände des Verbrauchers simuliert werden.

Vorteilhaft ist es, wenn das Ventil in der Bypassleitung druckabhängig öffnet und das zweite, umgehbare Coriolis-Messgerät für einen geringeren Maximaldurchsatz ausgelegt ist als das erste Coriolis-Messgerät. Durch die Verwendung des druckabhängig öffnenden Ventils in der Bypassleitung wird es möglich, jeweils die Messwerte des im entsprechenden Messbereich mit höherer Genauigkeit messenden Coriolis-Sensors zu verwenden. Unter einem abhängig vom Druck öffnenden Ventil wird dabei ein Ventil verstanden, welches bei Erreichen eines Schwelldruckes beginnt einen Öffnungsquerschnitt freizugeben, wobei dieser Öffnungsquerschnitt mit steigendem Druck zunimmt. Auf diese Weise können im Vergleich zu einem Schaltventil Druckstöße, die zu einer Unstetigkeit des gemessenen Durchflusses führen, vermieden werden.

In einer bevorzugten Ausführung ist zwischen dem ersten Ausgangsdruckregler und dem ersten Coriolismessgerät ein Messeinheitsdrucksensor angeordnet, wodurch der Einlassdruck der Coriolis-Messgeräte bestimmt werden kann und entsprechend mittels des ersten Ausgangsdruckreglers der Messeinheit eingestellt werden kann.

Des Weiteren ist es vorteilhaft, wenn in der Messeinheit vom ersten Ausgangsdruckregler eine erste Messeinheitsspülgasleitung abzweigt und vom zweiten Ausgangsdruckregler eine zweite Messeinheitsspülgasleitung abzweigt, die über ein drittes Rückschlagventil zum Spülgasauslassanschluss führen. Über diese Leitungen kann entsprechend die Messeinheit entweder vollständig oder lediglich der Einlassbereich der Messeinheit gespült werden. Ein unerwünschtes Einströmen von Gas in umgekehrter Richtung wird durch das Rückschlagventil verhindert. Als Auslass kann der Spülgasauslassanschluss der Versorgungseinheit genutzt werden. Auch hier kann eine Drosselung durch das Rückschlagventil oder eine entsprechend klein dimensionierte Leitung erzielt werden.

Stromabwärts des zweiten Coriolis-Messgerätes und stromaufwärts des zweiten Ausgangsdruckreglers ist ein weiterer Verbindungsanschluss ausgebildet, über den in die Hauptleitung eine Kalibriereinheit schaltbar ist. Durch ein Verbinden an dieser Position kann eine vollständige Kalibrierung der Messeinheit stattfinden, ohne dass die Hauptleitung weiter zum Ausgangsdruckregler durchströmt werden muss. Zur Kalibrierung kann somit auf ein Trennen der Verbindung zur Brennstoffzelle verzichtet werden und somit Zeit eingespart werden und das Risiko bei einer erneuten Wiederherstellung der Verbindung zur Brennstoffzelle eine Leckage zu erzeugen, ausgeschlossen werden.

Zusätzlich zu den bereits beschriebenen Spülgasleitungen ist es vorteilhaft, wenn von der Hauptleitung der Ausgangsdruckregeleinheit eine erste Ausgangsdruckregeleinheitsspülgasleitung stromaufwärts des Auslassdrucksensors abzweigt und eine zweite Ausgangsdruckregeleinheitsspülgasleitung stromabwärts oder in Höhe des Auslassdrucksensors abzweigt, in denen jeweils ein Schaltventil angeordnet ist und die über ein Rückschlagventil zu einem zweiten Spülgasauslassanschluss führen. Über diese Leitungen kann somit auch die Ausgangsdruckregeleinheit gespült werden oder die Ventile werden so geschaltet, dass auch der Verbraucher gespült wird, wobei über den Ausgangsdruckregler auch der Druck beim Spülen des Verbrauchers und der Ausgangsdruckregeleinheit eingestellt werden kann. Des Weiteren ist es möglich über die Durchflussmesser auch den Verbrach des Spülgases zu bestimmen.

In einer weiterführenden Ausführung ist in der Hauptleitung der Ausgangsdruckregeleinheit ein Temperatursensor angeordnet, über den somit die Temperatur am Austritt und entsprechend am Eintritt in den Verbraucher bestimmt werden kann. Dies kann einerseits zur Einstellung der Temperatur mit einer entsprechenden Konditioniereinheit genutzt werden aber auch um die gemessenen Durchflüsse zu korrigieren.

Des Weiteren weist die Ausgangsdruckregeleinheit vorzugsweise einen Verbindungsanschluss auf, über den in die Hauptleitung eine Leitungsvolumensimulationseinheit schaltbar ist. Entsprechend kann das spezifische Leitungsvolumen vom Tank bis zum Verbraucher simuliert werden, was insbesondere bim Herunterfahren einer Brennstoffzelle wichtig ist, da hierbei noch Wasserstoff benötigt wird.

Entsprechend wird ein Messsystem geschaffen, mit dem über einen weiten Durchflussbereich auftretende Durchflüsse sehr genau bei Gasen und Flüssigkeiten gemessen werden können, da Fehler durch Druckschwankungen in den Leitungen und dadurch sich ändernde Volumina in diesen Leitungen weitestgehend vermieden und nicht berücksichtigte Druckänderungen zwischen dem Messsystem und dem Verbraucher verhindert werden, da die Ausgangsdruckregeleinheit in unmittelbarer Nähe zum Verbraucher bei gleichen klimatischen Bedingungen platziert werden kann. Dies funktioniert auch bei größeren Entfernungen zwischen dem Verbraucher und der Versorgungseinheit, wie dies bei Klimaschranktests häufig der Fall ist. Ein derartiges Messsystem ist zusätzlich auf einfache Weise an Kundenwünsche bezüglich des Ausgangsdrucks und der Temperatur anzupassen und erreicht deutlich höhere Genauigkeiten als bekannte Messgeräte.

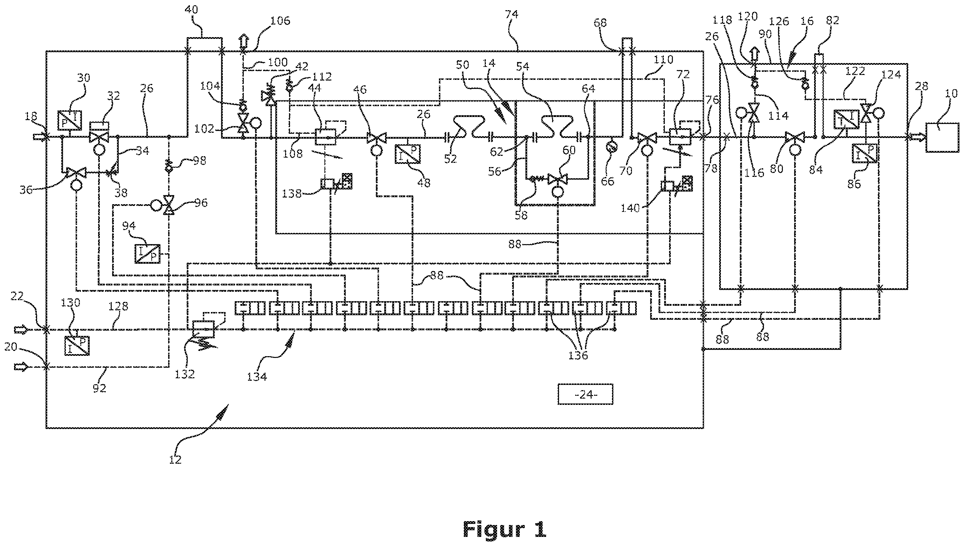

Ein erfindungsgemäßes Ausführungsbeispiel eines Messsystems ist in der Figur dargestellt und wird im Folgenden auch in seiner Funktionalität beschrieben.

Die Figur zeigt eine schematische Darstellung eines erfindungsgemäßen Messsystems.

Das in der Figur dargestellte erfindungsgemäße Messsystem, welches zum Messen eines Verbrauches beziehungsweise eines Durchflusses eines Mediums in einem Verbraucher 10, wie beispielsweise eines flüssigen Kraftstoffs in einem Verbrennungsmotor aber auch eines gasförmigen Kraftstoffs wie Wasserstoff in einer Brennstoffzelle, genutzt werden kann, besteht aus drei Modulen und zwar einer Versorgungseinheit 12, einer Messeinheit 14 und einer Ausgangsdruckregeleinheit 16.

Die Versorgungseinheit 12 dient zur Versorgung und Steuerung des Messsystems, wozu an der Versorgungseinheit 12 ein Medienanschluss 18, ein Spülgasanschluss 20 und ein Inertgas- oder Druckluftanschluss 22 zur pneumatischen und gegebenenfalls hydraulischen Versorgung sowie einer Steuereinheit 24 zur elektrischen Versorgung und Regelung des Messsystems.

Der Medienanschluss 18 führt in eine Hauptleitung 26, welche sich von der Versorgungseinheit 12 durch die Messeinheit 14 und die Ausgangsdruckregeleinheit 16 bis zu einem Medienauslass 28 führt, über den das Messsystem mit dem Verbraucher 10 verbunden werden kann und die während der Messung von einem Medium durchströmt wird, dessen Massendurchfluss bestimmt werden soll.

Unmittelbar stromabwärts des Medienanschlusses 18 ist in der Hauptleitung 26 ein Eingangsdrucksensor 30 angeordnet, mittels dessen geprüft werden kann, ob ein ausreichender Druck am Medienanschluss 18 vorliegt. Es folgt ein erstes pneumatisches Schaltventil 32, mit dem ein Durchfluss durch die Hauptleitung 26 unterbrochen werden kann. Dieses erste pneumatische Schaltventil 32 kann über eine Bypassleitung 34 umgangen werden, in der ein zweites pneumatisches Schaltventil 36 und eine Drossel 38 angeordnet sind. Entsprechend kann bei einem zu großen anliegenden Druck beim Anschalten des Messsystems das zweite Schaltventil 36 geöffnet werden, während das erste Schaltventil 32 zunächst geschlossen bleibt, wodurch das Medium über die Drossel 38 strömen muss, wodurch sich ein Druck in der folgenden Hauptleitung 26 erst allmählich aufbaut. Sobald der geforderte Druck erreicht ist, werden die beiden Schaltventile 32, 36 umgeschaltet, so dass der Druckverlust über die Drossel 38 entfällt und dem Messsystem der vollständige Druck vom Medienanschluss zur Verfügung steht. So können Schäden beim Hochfahren des Messsystems an nachfolgenden Aggregaten verhindert werden.

Die Hauptleitung 26 verläuft weiter zu einem ersten Verbindungsanschluss 40, an dem beispielsweise eine Zusatzheizung oder ein Kalibriergerät angeschlossen und somit in die Hauptleitung 26 geschaltet werden können.

Auch ist es möglich hier Proben zu entnehmen oder einen optionalen Druckregler anzuschließen, mit dem der Betriebsdruck von beispielsweise 250 bar auf 25 bar heruntergeregelt werden kann. Der optionale Anschluss bietet den Vorteil, dass bei normalen Betriebsdrücken der am Druckregler entstehende Druckabfall entfällt.

Die Hauptleitung 26 setzt sich im Folgenden in Richtung der Messeinheit 14 fort, wobei vor der Messeinheit 14 noch ein federbelastetes Sicherheitsventil 42 an der Hauptleitung 26 angeordnet ist, welches bei einem Druck von über 30 bar öffnet, um die Aggregate in der Messeinheit 14 zu schützen.

Um eine Unabhängigkeit von einem konstanten Versorgungsdruck der Versorgungseinheit 12 zu erzielen, ist ein erster Ausgangsdruckregler 44 zwischen der Versorgungseinheit 12 und der Messeinheit 14 in der Hauptleitung 26 angeordnet. Um Rückströmungen durch die Messeinheit 14 auszuschließen wird der Ausgangsdruck des Ausgangsdruckreglers 44 so eingestellt, dass er geringer ist als der übliche Versorgungsdruck der Versorgungseinheit 12, wodurch auch bei fallendem Druckniveau der Versorgungseinheit 12 der Ausgangsdruck am Ausgangsdruckregler 44 und damit auch in der Messeinheit 14 aufrecht erhalten werden kann.

Stromabwärts des ersten Ausgangsdruckreglers 44 befindet sich ein Schaltventil 46 zum Absperren der Hauptleitung 26 sowie ein Messeinheitsdrucksensor 48 zum Überprüfen des mittels des Ausgangsdruckreglers 44 eingestellten Druckes.

Stromabwärts des Messeinheitsdrucksensors 48 ist ein Durchflussmesser 50 angeordnet. Dieser besteht aus einem ersten Coriolis-Messgerät 52, welches auf einen Maximaldurchfluss ausgelegt ist, der über dem zu erwartenden Maximaldurchfluss im Messsystem liegt. Ein solches Coriolis-Messgerät 52 liefert bei geringen Durchflüssen keine exakten Messwerte aufgrund einer Nullpunktsdrift, die entsteht, weil ein gewisser Mindestdurchfluss für eine exakte Messung bei Coriolis-Messgeräten erforderlich ist.

Stromabwärts dieses ersten Coriolis-Messgerätes 52 ist ein zweites Coriolis-Messgerät 54 in der Hauptleitung 26 angeordnet, dessen Maximaldurchfluss geringer ist als der Maximaldurchfluss des ersten Coriolis-Messgerätes 52, welches jedoch bei geringeren Durchflüssen aufgrund seines Messbereichs exaktere Messwerte liefert als das erste Coriolis-Messgerät 52.

Da dieses zweite, stromabwärtige Coriolis-Messgerät 54 im oberen zu messenden Bereich oberhalb seines Maximaldurchflusses einen extrem hohen Druckverlust aufgrund der entstehenden Blendenwirkung verursachen würde, der den zu messenden Durchfluss am Prüfling verfälschen würde beziehungsweise diesen aufgrund eines nicht mehr ausreichenden Mindestausgangsdrucks unmöglich machen würde, zweigt von der Hauptleitung 26 zwischen dem ersten Coriolis-Messgerät 52 und dem zweiten Coriolis-Messgerät 54 eine Bypassleitung 56 ab. Diese Bypassleitung 56 mündet stromabwärts des zweiten Coriolis-Messgerätes 54 wieder in die Hauptleitung 26.

In der Bypassleitung 56 ist ein druckabhängig schaltendes Ventil 58, welches als Rückschlagventil ausgebildet ist, sowie ein weiteres Schaltventil 60 angeordnet. Das druckabhängig schaltende Ventil 58 öffnet oder schließt einen Durchströmungsquerschnitt der Bypassleitung 56 in Abhängigkeit der auf das Ventil 58 wirkenden Druckdifferenz. Liegt eine Druckdifferenz an, die eine Schwellendruckdifferenz überschreitet, wird entsprechend der Durchströmungsquerschnitt freigegeben und das Medium kann von einer Abzweigung 62 der Bypassleitung 56 aus der Hauptleitung 26 durch die Bypassleitung 56 und über eine Mündung 64 der Bypassleitung 56 zurück in die Hauptleitung 26 strömen.

Dieser Durchflussmesser 50 ist mit der Steuereinheit 24 verbunden, an die die Messwerte der Coriolis-Messgeräte 52, 54 übertragen werden und in der diese Messwerte verarbeitet werden, um ein nutzbares Messergebnis zu erzeugen, wobei je nach Größe des Durchflusses entweder die Messwerte des ersten Coriolis-Messgerätes 52 oder des zweiten Coriolis-Messgerätes 54 und in einem Übergangsbereich die Messwerte beider Coriolis-Messgeräte 52, 54 genutzt werden.

Eine Rückwirkung durch das Schalten des druckabhängig öffnenden Ventils 58 auf die Ausgangswerte des Messsystems sind dadurch weitestgehend ausgeschlossen, dass das Ventil 58 mit steigendem Druck weiter öffnet und somit allmählich einen zusätzlichen Durchströmungsquerschnitt freigibt, während der Widerstand am zweiten Coriolis-Messgerät 54 wächst. Ein Drucksprung wird auf diese Weise zuverlässig verhindert.

Stromabwärts der Mündung 64 der Bypassleitung 56 ist in der Hauptleitung 26 ein Manometer 66 zur Überprüfung des Drucks angeordnet. Die Hauptleitung 26 setzt sich zu einem weiteren Verbindungsanschluss 68 fort, an den insbesondere eine Kalibriereinheit angeschlossen werden kann, mit der der Durchflussmesser 50 kalibriert werden kann, ohne dass in die weiterführende Leitung eingegriffen werden muss.

Im Anschluss an ein weiteres Schaltventil 70 ist in der Hauptleitung 26 ein zweiter Ausgangdruckregler 72 angeordnet, über den ein Auslassdruck des Messsystems und damit am Verbraucher 10 entweder konstant gehalten wird oder anhand einer zeitlichen Kennlinie gesteuert wird. Auch eine Druckkennlinie, wie beim Leeren eines Tanks kann simuliert werden.

Die Versorgungseinheit 12 ist mit der Messeinheit 14 in einem gemeinsamen Gehäuse 74 angeordnet, welches einen Auslassanschluss 76 aufweist, der mit einem Einlassanschluss 78 der folgenden Ausgangsdruckregeleinheit 16 verbunden ist. In der Hauptleitung 26 der Ausgangsdruckregeleinheit 16 ist zunächst ein Schaltventil 80 angeordnet, mit dem die Hauptleitung 26 absperrbar ist. Im Folgenden weist die Ausgangsdruckregeleinheit 16 einen weiteren Verbindungsanschluss 82 auf. Hier kann insbesondere eine Leitungsvolumensimulationseinheit angeschlossen werden. Diese simuliert das spezifische Leitungsvolumen vom Tank bis zum Verbraucher 10. Dies kann erforderlich sein, weil Brennstoffzellensysteme zum Herunterfahren noch Wasserstoff benötigen. Idealerweise wird das Gesamtsystem so ausgelegt, dass das Gas, das in den Leitungen gespeichert ist, ausreicht. Um dies bei der Auslegung zu simulieren, kann dieser Verbindungsanschluss 82 genutzt werden.

Im weiteren Verlauf ist in der Hauptleitung 26 ein Temperatursensor 84 und ein Auslassdrucksensor 86 angeordnet, der fluidisch unmittelbar vor dem Medienauslass 28 und damit dem Verbraucher 10 angeordnet ist, so dass der Eintrittsdruck und die Eintrittstemperatur am Verbraucher 10 gemessen werden können, wenn die Ausgangsdruckregeleinheit 16 entsprechend nah am Verbraucher 10 angeordnet werden kann. Der Temperatursensor 84 und der Auslassdrucksensor 86 sind über elektrische Leitungen, welche zur besseren Übersichtlichkeit nicht dargestellt sind, mit der Steuereinheit 24 verbunden, die entsprechende Befehle zur Regelung an den Ausgangsdruckregler 72 gibt, so dass der gewünschte Ausgangsdruck am Auslassdrucksensor 86 gemessen und über den Ausgangsdruckregler 72 in Abhängigkeit von dessen Messwerten eingestellt wird.

Um die Ausgangsdruckregeleinheit 16 auch nah genug am Verbraucher 10 anordnen zu können, ist diese lediglich über elektrische Leitungen und pneumatische Steuerleitungen 88 mit der Versorgungseinheit 12 verbunden und kann ansonsten in einer Entfernung von bis zu 10m von der Versorgungseinheit 12 und der Messeinheit 14 aufgestellt werden.

Hierzu ist die Ausgangsdruckregeleinheit 16 in einem separaten Gehäuse 90 angeordnet, welches beispielsweise mit dem Verbraucher 10 in einem Klimaraum angeordnet werden kann, so dass die tatsächlichen Druckwerte übermittelt werden können, ohne dass Schäden an den empfindlichen Bauteilen der Messeinheit 14, wie dem Durchflussmesser 50 oder den Ausgangsdruckreglern 44, 72 oder den empfindlichen Bauteilen der Versorgungseinheit 12, wie der Steuereinheit 24, befürchten zu müssen.

Über die Versorgungseinheit 12 besteht zusätzlich die Möglichkeit, das Messsystem in Teilen oder vollständig, beispielsweise mit Stickstoff, zu spülen, um beispielsweise auf ein anderes Medium umstellen zu können. Hierzu weist der Spülgasanschluss 20 eine Verbindung zu einer Spülgaszuleitung 92 auf, in der ein Spülgasdrucksensor 94, ein erstes Spülgasventil 96 und ein erstes Rückschlagventil 98 angeordnet sind, und welche zwischen dem ersten Schaltventil 32 und dem ersten Verbindungsanschluss 40 in die Hauptleitung 26 mündet. Als Spülgas wird üblicherweise ein Inertgas, wie beispielsweise Stickstoff verwendet.

Mit dem Spülgasdrucksensor 94 wird der Druck des Spülgases gemessen, was lediglich dazu dient, einen zu niedrigen Druck zu detektieren, bei dem die Spülung nicht mehr gewährleistet wäre. Das Spülgasventil 96 wird zum Einleiten des Spülvorgangs geöffnet und befindet sich sonst in seiner Schließstellung, während das Rückschlagventil 98 lediglich dazu dient, ein Einströmen des Messmediums in die Spülgaszuleitung 92 zu verhindern.

Stromabwärts des Verbindungsanschlusses und stromaufwärts des Sicherheitsventils 42 zweigt von der Hauptleitung 26 eine Versorgungseinheitsspülgasableitung 100 ab, in der ein zweites pneumatisches Spülgasventil 102 und ein zweites Rückschlagventil 104 angeordnet sind und die so dünn ausgeführt wird, dass der Durchfluss einen definierten Wert annimmt. Wenn das Spülgasventil 102 geöffnet wird, wird der Bereich der Versorgungseinheit 12 vor der Messeinheit 14 und somit vor dem Ausgangsdruckregler 44 gespült. Das Rückschlagventil 104 dient erneut dazu, ein Einströmen von Gas von einem ersten Spülgasauslassanschluss 106, an dem die erste Versorgungseinheitsspülgasableitung 100 mündet, in das Messsystem zu verhindern.

Soll die Messeinheit 14 beziehungsweise die Messeinheit 14 und die Ausgangsdruckregeleinheit 16 gespült werden, werden zunächst die Schaltventile 32, 36 geschlossen. Vom ersten Ausgangsdruckregler 44 zweigt eine erste Messeinheitsspülgasleitung 108 und vom zweiten Ausgangsdruckregler 72 zweigt eine zweite Messeinheitsspülgasleitung 110 ab, die sich stromaufwärts eines dritten Rückschlagventils 112 vereinigen. Die gemeinsame Messeinheitsspülgasleitung mündet am ersten Spülgasauslassanschluss 106. Des Weiteren ist an der Ausgangsdruckregeleinheit 16 eine erste wiederum zur Durchflussreduzierung dünn ausgeführte Ausgangsdruckregeleinheitsspülgasleitung 114 vorgesehen, die von der Hauptleitung 26 abzweigt und in der ein Schaltventil 116 sowie aus den bereits genannten Gründen ein Rückschlagventil 118 angeordnet sind. Die Ausgangsdruckregeleinheitsspülgasleitung 114 endet an einem zweiten Spülgasauslassanschluss 120, an dem auch eine zweite dünne Ausgangsdruckregeleinheitsspülgasleitung 122 mündet, die in Höhe des Auslassdrucksensors 86 von der Hauptleitung 26 abzweigt und in der ebenfalls ein Schaltventil 124 und ein Rückschlagventil 126 angeordnet sind. Je nachdem, welches der Schaltventile 102, 46, 70, 116, 124 geöffnet wird, können entsprechend unterschiedliche Bereiche des Messsystems gespült werden. Durch Öffnen der Ventile 46, 70, 96, 124 wird das gesamte Messsystem einschließlich der Ausgangsdruckregeleinheit 16 gespült. Soll nur die Versorgungseinheit 12 und die Messeinheit 14 gespült werden, können beispielsweise die Ventile 80, 116 geschlossen werden und die Ventile 46, 70, 96 geöffnet werden. Soll der Verbraucher 10 ebenfalls gespült werden, wird das Ventil 80 geöffnet während die Ventile 116, 124 geschlossen werden. Beim Spülen des Verbrauchers 10 kann mittels des fernverstellbaren Ausgangsdruckreglers 72 ein definierter Spüldruck für den Verbraucher bereitgestellt werden, der vom Kunden definiert werden kann.

Selbstverständlich können die Spülgasströme, wenn nicht lediglich die Versorgungseinheit 12 gespült wird, auch über den Durchflussmesser 50 gemessen werden, wodurch ein Verbrauch an Spülgas bestimmt werden kann. Ein besonders effizientes Spülen ergibt sich durch einen Pulsationsbetrieb. Dabei werden die Schaltventile 102, 46, 70, 116, 124 lediglich kurz geöffnet um das sich unter Druck befindliche Gas in die Spülgasleitungen 100, 108, 110, 114, 122 zu befördern. Im geschlossenen Zustand der Ventile hat das Spülgas die Möglichkeit sich mit dem Hauptgas zu mischen, wodurch Toträume, in denen sich das zu messende Medium gesammelt hat, durch Mischung mit dem Spülgas aufzulösen.

Die Versorgungseinheit 12 ist zusätzlich zur Versorgung des Messsystems mit Inertgas zur Betätigung der pneumatischen Ventile 32, 36, 46, 60, 70, 80, 96, 102, 116, 124 und Ausgangsdruckregler 44, 72 ausgelegt, wobei auch eine Versorgung mit Druckluft möglich ist, wobei im Folgenden beispielhaft von Inertgas ausgegangen wird. Hierzu führt vom Inertgasanschluss 22, an dem unter Druck stehendes Inertgas anliegt eine Inertgasleitung 128 über einen Einlassdrucksensor 130 und einen Inertgasdruckregler 132 zu einer Ventilleiste 134, an der eine Vielzahl an Elektromagnetventilen 136 angeordnet sind. Über den Einlassdrucksensor 130 kann ermittelt werden, ob ein ausreichender Druck anliegt, der anschließend vom Inertgasdruckregler 132 auf den zur Schaltung der pneumatischen Ventile 32, 36, 46, 60, 70, 80, 96, 102, 116, 124 notwendigen Druck geregelt werden kann. Jedes Elektromagnetventil 136 ist entsprechend einem der Ventile 32, 36, 46, 60, 70, 80, 96, 102, 116, 124 zugeordnet und über die entsprechende pneumatische Steuerleitung 88 mit dem zugeordneten Ventil 32, 36, 46, 60, 70, 80, 96, 102, 116, 124 verbunden. Beim Durchschalten der Elektromagnetventile 136 wird einem Druckraum der Schaltventile 32, 36, 46, 60, 70, 80, 96, 102, 116, 124 ein entsprechend durch den Inertgasdruckregler 132 oder Druckluftregler geregelter Druck zugeführt, durch den das entsprechende Ventil in seinen geöffneten Zustand versetzt wird, während bei nicht durchgeschaltetem Elektromagnetventil das Ventil in seinem geschlossenen Zustand verharrt. Die Elektromagnetventile 136 sind mit der Steuereinheit 24 verbunden und im selben Gehäuse 74 angeordnet, so dass lediglich kurze elektrische Leitungen zum Schalten der Elektromagnetventile 136 benötigt werden.

Das Schalten der pneumatisch regelbaren Ausgangsdruckregler 44, 72 erfolgt über elektropneumatische Wandler 138, 140, welche in der Lage sind, in Abhängigkeit des Stromes, der auf die Spule wirkt, einen Durchströmungsquerschnitt zu regeln. Entsprechend wird dem jeweiligen Ausgangsdruckregler 44, 72 ein von der Stromstärke abhängiger Inertgasdruck zugeführt, durch den eine Regelung des Mediendruckes ermöglicht wird.

Ein derartig aufgebautes Messsystem liefert über ein breites Druck- und Durchflussspektrum sehr genaue Messwerte, die kontinuierlich zur Verfügung stehen und zwar auch dann, wenn der Verbraucher in besonderen Bedingungen getestet werden muss, wie etwa bei hohen oder sehr niedrigen Temperaturen, die an der Messeinheit oder der Elektronik der Versorgungseinheit Schäden verursachen würden. Dieses Messsystem ist für die Messung von Gasen und Flüssigkeiten geeignet und erreicht hohe Messgenauigkeiten auch bei sehr kleinen Durchflüssen. Der modulare Aufbau ermöglicht eine sehr genaue Anpassung an die Kundenwünsche, da sowohl die Einheiten unterschiedlich zueinander positioniert werden können als auch verschiedene Zusatzeinheiten zugeschaltet werden können.

Selbstverständlich sind auch zusätzliche, im Ausführungsbeispiel nicht beschriebene Erweiterungen denkbar. So kann noch eine Temperaturkonditioniereinheit eingebaut werden, die Ventile als elektrische oder hydraulische Ventile ausgeführt werden oder andere Durchflussmesser verwendet werden. Weitere Änderungen ergeben sich ebenfalls für den Fachmann innerhalb des Schutzbereiches des Hauptanspruchs.

## Patentansprüche

1. Messsystem zur Messung eines Durchflusses an einem Verbraucher (10) mit einer Versorgungseinheit (12), welche Versorgungseinheit (12) einen Medienanschluss (18) und einen Spülgasanschluss (20) und/oder einen Inertgas- oder Druckluftanschluss (22) aufweist,
einer Messeinheit (14) mit zumindest einem Durchflussmesser (50) und zumindest einem ansteuerbaren Ventil (46, 60, 70), die mit der Versorgungseinheit (12) zur wahlweisen Einleitung eines Medienstroms oder eines Spülgasstroms fluidisch verbunden ist und über die ein Durchfluss messbar ist,
einer Ausgangsdruckregeleinheit (16), über welche die Messeinheit (14) mit dem Verbraucher (10) verbindbar ist und die zumindest einen Auslassdrucksensor (86) und zumindest ein ansteuerbares Ventil (80, 116, 124) aufweist,
einer Hauptleitung (26), die mit dem Medienanschluss (18) verbunden ist und über die die Versorgungseinheit (12), die Messeinheit (14) und die Ausgangsdruckregeleinheit (16) fluidisch verbunden sind,
wobei
die Versorgungseinheit (12) und die Messeinheit (14) in einem Gehäuse (74) angeordnet sind und die Ausgangsdruckregeleinheit (16) in einem separaten Gehäuse (90) angeordnet ist, wobei die ansteuerbaren Ventile (46, 60, 70, 80, 116, 124) der Messeinheit (14) und der Ausgangsdruckregeleinheit (16) und der Auslassdrucksensor (86) der Ausgangsdruckregeleinheit (16) mit der Versorgungseinheit (12) über Leitungen (88) verbunden sind.

2. Messsystem zur Messung eines Durchflusses nach Anspruch 1,
**dadurch gekennzeichnet, dass**
die Ausgangsdruckregeleinheit (16) beabstandet zur Messeinheit (14) angeordnet ist und ausschließlich über die Hauptleitung (26) unmittelbar mit der Messeinheit (14) verbunden ist.

3. Messsystem zur Messung eines Durchflusses nach Anspruch 1 oder 2, **dadurch gekennzeichnet, dass**
die Ausgangsdruckregeleinheit (16) beabstandet zur Versorgungseinheit (12) angeordnet ist und ausschließlich über die Hauptleitung (26), pneumatische Steuerleitungen (88) und zumindest eine elektrische Leitung mit der Versorgungseinheit (12) verbunden ist, wobei die elektrische Leitung den Auslassdrucksensor (86) mit einer Steuereinheit (24) der Versorgungseinheit (12) verbindet.

4. Messsystem zur Messung eines Durchflusses nach einem der Ansprüche 1 bis 3,
**dadurch gekennzeichnet, dass**
die Ausgangsdruckregeleinheit (16) mit dem Verbraucher (10) in einem Klimaraum angeordnet ist und die Messeinheit (14) und die Versorgungseinheit (12) außerhalb des Klimaraumes angeordnet sind.

5. Messsystem zur Messung eines Durchflusses nach einem Ansprüche 3 oder 4,
**dadurch gekennzeichnet, dass**
die Versorgungseinheit (12) eine Ventilleiste (134) mit mehreren Elektromagnetventilen (136) aufweist, die jeweils über eine pneumatische Steuerleitung (88) mit den ansteuerbaren pneumatischen Ventilen (32, 36, 46, 60, 70, 80, 96, 102, 116, 124) der Versorgungseinheit (12), der Messeinheit (14) und der Ausgangsdruckregeleinheit (16) verbunden sind und die elektrisch mit der Steuereinheit (24) verbunden sind.

6. Messsystem zur Messung eines Durchflusses nach Anspruch 5,
**dadurch gekennzeichnet, dass**
der Inertgas- oder Druckluftanschluss (22) der Versorgungseinheit (12) mit der Ventilleiste (134) über eine Inertgas- oder Druckluftleitung (128) verbunden ist, in der ein Inertgas- oder Luftdruckregler (132) und ein Einlassdrucksensor (130) angeordnet sind.

7. Messsystem zur Messung eines Durchflusses nach einem der Ansprüche 1 bis 6,
**dadurch gekennzeichnet, dass**
die Versorgungseinheit (12) ein Dämpfungselement aufweist, welches ein erstes Schaltventil (32) in der Hauptleitung (26) aufweist und eine Bypassleitung (34) aufweist, über die das erste Schaltventil (32) umgehbar ist und in der ein zweites Schaltventil (36) und eine Drossel (38) angeordnet sind.

8. Messsystem zur Messung eines Durchflusses nach einem der Ansprüche 1 bis 7,
**dadurch gekennzeichnet, dass**
die Versorgungseinheit (12) einen in der Hauptleitung (26) angeordneten Eingangsdrucksensor (30) aufweist, in Abhängigkeit dessen ein erster Ausgangsdruckregler (44), welcher vor dem Durchflussmesser (50) der Messeinheit (14) in der Hauptleitung (26) angeordnet ist, geregelt ist.

9. Messsystem zur Messung eines Durchflusses nach einem der Ansprüche 1 bis 8,
**dadurch gekennzeichnet, dass**
die Versorgungseinheit (12) eine Spülgaszuleitung (92) aufweist, die von einem Spülgasanschluss (20) zur Hauptleitung (26) führt und in der ein erstes Spülgasventil (96), ein erstes Rückschlagventil (98) und ein Spülgasdrucksensor (94) angeordnet sind.

10. Messsystem zur Messung eines Durchflusses nach einem der Ansprüche 1 bis 9,
**dadurch gekennzeichnet, dass**
die Versorgungseinheit (12) eine Versorgungseinheitsspülgasableitung (100) aufweist, die stromaufwärts der Messeinheit (14) von der Hauptleitung (26) abzweigt und an einem ersten Spülgasauslassanschluss (106) mündet, wobei in der Versorgungseinheitsspülgasableitung (100) ein zweites Spülgasventil (102) und ein zweites Rückschlagventil (104) angeordnet sind.

11. Messsystem zur Messung eines Durchflusses nach einem der Ansprüche 1 bis 10,
**dadurch gekennzeichnet, dass**
die Versorgungseinheit (12) einen Verbindungsanschluss (40) aufweist, über den in die Hauptleitung (26) stromaufwärts der Messeinheit (14) eine Zusatzeinheit schaltbar ist.

12. Messsystem zur Messung eines Durchflusses nach einem der Ansprüche 1 bis 11,
**dadurch gekennzeichnet, dass**
in der Hauptleitung (26) der Messeinheit (14) ein zweiter Ausgangsdruckregler (72), ein erstes Coriolis-Messgerät (52) und ein zweites Coriolis-Messgerät (54), welches stromabwärts des ersten Coriolis-Messgeräts (52) in der Hauptleitung (26) angeordnet ist, und über eine Bypassleitung (56) umgehbar ist, in der ein Ventil (58) angeordnet ist.

13. Messsystem zur Messung eines Durchflusses nach Anspruch 12,
**dadurch gekennzeichnet, dass**
der zweite Ausgangsdruckregler (72) stromabwärts der beiden Coriolis-Messgeräte (52, 54) angeordnet ist und auf einen konstanten Sollwert oder entlang einer Sollwert-Kennlinie regelbar ist.

14. Messsystem zur Messung eines Durchflusses nach einem der Ansprüche 12 oder 13,
**dadurch gekennzeichnet, dass**
das Ventil (58) in der Bypassleitung (56) druckabhängig öffnet und das zweite Coriolis-Messgerät (54) für einen geringeren Maximaldurchsatz ausgelegt ist als das erste Coriolis-Messgerät (52).

15. Messsystem zur Messung eines Durchflusses nach Anspruch 13 oder 14,
**dadurch gekennzeichnet, dass**
zwischen dem ersten Ausgangsdruckregler (44) und dem ersten Coriolismessgerät (52) ein Messeinheitsdrucksensor (48) angeordnet ist.

16. Messsystem zur Messung eines Durchflusses nach Anspruch 15,
**dadurch gekennzeichnet, dass**
vom ersten Ausgangsdruckregler (44) eine erste Messeinheitsspülgasleitung (108) abzweigt und vom zweiten Ausgangsdruckregler (72) eine zweite Messeinheitsspülgasleitung (110) abzweigt, die über ein drittes Rückschlagventil (112) zum Spülgasauslassanschluss (106) führen.

17. Messsystem zur Messung eines Durchflusses nach Anspruch 15 oder 16,
**dadurch gekennzeichnet, dass**
stromabwärts des zweiten Coriolis-Messgerätes (54) und stromaufwärts des zweiten Ausgangsdruckreglers (72) ein Verbindungsanschluss (68) ausgebildet ist, über den in die Hauptleitung (26) eine Kalibriereinheit schaltbar ist.

18. Messsystem zur Messung eines Durchflusses nach einem der Ansprüche 1 bis 17,
**dadurch gekennzeichnet, dass**
von der Hauptleitung (26) der Ausgangsdruckregeleinheit (16) eine erste Ausgangsdruckregeleinheitsspülgasleitung (114) stromaufwärts des Auslassdrucksensors (86) abzweigt und eine zweite Ausgangsdruckregeleinheitsspülgasleitung (122) stromabwärts oder in Höhe des Auslassdrucksensors (86) abzweigt, in denen jeweils ein Schaltventil (116, 124) angeordnet ist und die über ein Rückschlagventil 118, 126) zu einem zweiten Spülgasauslassanschluss (120) führen.

19. Messsystem zur Messung eines Durchflusses nach einem der Ansprüche 1 bis 18,
**dadurch gekennzeichnet, dass**
in der Hauptleitung (26) der Ausgangsdruckregeleinheit (16) ein Temperatursensor (84) angeordnet ist.

20. Messsystem zur Messung eines Durchflusses nach einem der Ansprüche 1 bis 19,
**dadurch gekennzeichnet, dass**
die Ausgangsdruckregeleinheit (16) einen Verbindungsanschluss (82) aufweist, über den in die Hauptleitung (26) eine Leitungsvolumensimulationseinheit schaltbar ist.

## Claims

1. Measuring system for measuring a flow rate on a consumer (10) having a supply unit (12), which supply unit (12) comprises
a media connection (18) and a purge gas connection (20) and/or an inert gas or compressed air connection (22)
a measuring unit (14) with at least one flow meter (50) and at least one controllable valve (46, 60, 70), which is fluidically connected to the supply unit (12) for the optional introduction of a media flow or a purge gas flow and via which a flow can be measured,
an outlet pressure control unit (16), via which the measuring unit (14) can be connected to the consumer (10) and which comprises at least one outlet pressure sensor (86) and at least one controllable valve (80, 116, 124)
a main line (26) which is connected to the media connection (18) and via which the supply unit (12), the measuring unit (14) and the outlet pressure regulating unit (16) are fluidically connected,
wherein
the supply unit (12) and the measuring unit (14) are arranged in a housing (74) and the outlet pressure regulating unit (16) is arranged in a separate housing (90), wherein the controllable valves (46, 60, 70, 80, 116, 124) of the measuring unit (14) and the outlet pressure regulating unit (16) and the outlet pressure sensor (86) of the outlet pressure regulating unit (16) are connected to the supply unit (12) via lines (88).

2. Measuring system for measuring a flow rate according to claim 1, **characterized in that**
the output pressure regulating unit (16) is arranged at a distance from the measuring unit (14) and is connected directly to the measuring unit (14) exclusively via the main line (26).

3. Measuring system for measuring a flow rate according to claim 1 or 2, **characterized in that**
the outlet pressure control unit (16) is arranged at a distance from the supply unit (12) and is connected to the supply unit (12) exclusively via the main line (26), pneumatic control lines (88) and at least one electrical line, the electrical line connecting the outlet pressure sensor (86) to a control unit (24) of the supply unit (12).

4. Measuring system for measuring a flow rate according to any one of claims 1 to 3,
**characterized in that**
the outlet pressure control unit (16) is arranged with the consumer (10) in an climatic chamber and the measuring unit (14) and the supply unit (12) are arranged outside the climatic chamber.

5. Measuring system for measuring a flow rate according to one of claims 3 or 4,
**characterized in that**
the supply unit (12) comprises a valve manifold (134) with a plurality of solenoid valves (136), which are respectively connected via a pneumatic control line (88) to the controllable pneumatic valves (32, 36, 46, 60, 70, 80, 96, 102, 116, 124) of the supply unit (12), the measuring unit (14) and the outlet pressure regulating unit (16) and which are electrically connected to the control unit (24).

6. Measuring system for measuring a flow rate according to claim 5, **characterized in that**
the inert gas or compressed air connection (22) of the supply unit (12) is connected to the valve manifold (134) via an inert gas or compressed air line (128) in which an inert gas or air pressure regulator (132) and an inlet pressure sensor (130) are arranged.

7. Measuring system for measuring a flow rate according to any one of claims 1 to 6,
**characterized in that**
the supply unit (12) comprises a damping element which comprises a first switching valve (32) in the main line (26) and comprises a bypass line (34) via which the first switching valve (32) can be bypassed and in which a second switching valve (36) and a throttle (38) are arranged.

8. Measuring system for measuring a flow according to any one of claims 1 to 7,
**characterized in that**
the supply unit (12) comprises an inlet pressure sensor (30) arranged in the main line (26), in dependence on which a first outlet pressure regulator (44), which is arranged in the main line (26) upstream of the flow meter (50) of the measuring unit (14), is controlled.

9. Measuring system for measuring a flow rate according to any one of claims 1 to 8,
**characterized in that**
the supply unit (12) comprises a purging gas supply line (92), which leads from a purging gas connection (20) to the main line (26) and in which a first purging gas valve (96), a first check valve (98) and a purging gas pressure sensor (94) are arranged.

10. Measuring system for measuring a flow rate according to any one of claims 1 to 9,
**characterized in that**
the supply unit (12) comprises a supply unit purge gas discharge line (100) that branches off from the main line (26) upstream of the measuring unit (14) and leads to a first purge gas outlet port (106), wherein a second purge gas valve (102) and a second check valve (104) are arranged in the supply unit purge gas discharge line (100).

11. Measuring system for measuring a flow rate according to any one of claims 1 to 10,
**characterized in that**
the supply unit (12) comprises a connection port (40) via which an additional unit can be connected into the main line (26) upstream of the measuring unit (14).

12. Measuring system for measuring a flow rate according to one of claims 1 to 11,
**characterized in that**
in the main line (26) of the measuring unit (14) a second outlet pressure regulator (72), a first Coriolis measuring device (52) and a second Coriolis measuring device (54) arranged downstream of the first Coriolis measuring device (52) in the main line (26) and bypassable via a bypass line (56) in which a valve (58) is arranged.

13. Measuring system for measuring a flow rate according to claim 12, **characterized in that**
the second output pressure regulator (72) is arranged downstream of the two Coriolis measuring devices (52, 54) and is controllable to a constant setpoint or along a setpoint characteristic.

14. Measuring system for measuring a flow rate according to one of claims 12 or 13,
**characterized in that**
the valve (58) in the bypass line (56) opens in a pressure-dependent manner and the second Coriolis measuring device (54) is designed for a lower maximum flow rate than the first Coriolis measuring device (52).

15. Measuring system for measuring a flow rate according to claim 13 or 14,
**characterized in that**
a measuring unit pressure sensor (48) is arranged between the first outlet pressure regulator (44) and the first Coriolis measuring device (52).

16. Measuring system for measuring a flow rate according to claim 15, **characterized in that**
a first measuring unit purge gas line (108) branches off from the first outlet pressure regulator (44) and a second measuring unit purge gas line (110) branches off from the second outlet pressure regulator (72), which lead to the purge gas outlet port (106) via a third check valve (112).

17. Measuring system for measuring a flow rate according to claim 15 or 16,
**characterized in that**
a connection port (68) is configured downstream of the second Coriolis measuring device (54) and upstream of the second outlet pressure regulator (72), via which a calibration unit can be connected into the main line (26).

18. Measuring system for measuring a flow rate according to one of claims 1 to 17,
**characterized in that**
a first outlet pressure control unit purge gas line (114) branches off from the main line (26) of the outlet pressure control unit (16) upstream of the outlet pressure sensor (86), and a second outlet pressure control unit purge gas line (122) branches off downstream or at the level of the outlet pressure sensor (86), in which a switching valve (116, 124) is arranged respectively and which lead to a second purge gas outlet connection (120) via a check valve (118, 126).

19. Measuring system for measuring a flow rate according to any one of claims 1 to 18,
**characterized in that**
a temperature sensor (84) is arranged in the main line (26) of the outlet pressure regulating unit (16).

20. Measuring system for measuring a flow according to one of claims 1 to 19,
**characterized in that**
the outlet pressure regulating unit (16) comprises a connection port (82) via which a line volume simulation unit can be connected into the main line (26).

## Revendications

1. Système de mesure pour la mesure d'un flux sur un consommateur (10) avec
une unité de distribution (12), laquelle unité de distribution (12) comprend un port de fluide (18)
un port de gaz de purge (20) et/ou un port de gaz inerte ou d'air comprimé (22),
une unité de mesure (14) comprenant au moins un débitmètre (50) et au moins une vanne commandable (46, 60, 70), qui est reliée de manière fluidique à l'unité de distribution (12) pour l'introduction sélective d'un flux de fluide ou d'un flux de gaz de rinçage, et par l'intermédiaire de laquelle un flux peut être mesuré,
une unité de régulation de la pression de sortie (16), par laquelle l'unité de mesure (14) peut être reliée au consommateur (10) et qui comprend au moins un capteur de pression de sortie (86) et au moins une soupape commandable (80, 116, 124),
une conduite principale (26) qui est reliée au port de fluide (18) et par laquelle l'unité de distribution (12), l'unité de mesure (14) et l'unité de régulation de la pression de sortie (16) sont reliées de manière fluidique,
où
l'unité d'alimentation (12) et l'unité de mesure (14) sont disposées dans un boîtier (74) et l'unité de régulation de la pression de sortie (16) est disposée dans un boîtier séparé (90), les vannes commandables (46, 60, 70, 80, 116, 124) de l'unité de mesure (14) et de l'unité de régulation de la pression de sortie (16) et le capteur de pression de sortie (86) de l'unité de régulation de la pression de sortie (16) étant reliés à l'unité d'alimentation (12) par des lignes (88).

2. Système de mesure pour la mesure d'un flux selon la revendication 1,
**caractérisé en ce que**
l'unité de régulation de la pression de sortie (16) est placée à distance de l'unité de mesure (14) et est reliée directement à l'unité de mesure (14) exclusivement par la conduite principale (26).

3. Système de mesure pour la mesure d'un flux selon la revendication 1 ou 2,
**caractérisé en ce que**
l'unité de régulation de la pression de sortie (16) est placée à distance de l'unité de distribution (12) et est reliée à l'unité de distribution (12) exclusivement par la conduite principale (26), des conduites de commande pneumatiques (88) et au moins une conduite électrique, la conduite électrique reliant le capteur de pression de sortie (86) à une unité de commande (24) de l'unité de distribution (12).

4. Système de mesure pour la mesure d'un flux selon l'une des revendications 1 à 3,
**caractérisé en ce que**
l'unité de régulation de la pression de sortie (16) est placée avec le consommateur (10) dans une chambre climatique et l'unité de mesure (14) et l'unité de distribution (12) sont placées à l'extérieur de la chambre climatique.

5. Système de mesure pour la mesure d'un flux selon l'une des revendications 3 ou 4,
**caractérisé en ce que**
l'unité de distribution (12) comprend une barre de vannes (134) avec plusieurs électrovannes (136), chacune reliée par une ligne de commande pneumatique (88) aux vannes pneumatiques pilotables (32, 36, 46, 60, 70, 80, 96, 102, 116, 124) de l'unité de distribution (12), de l'unité de mesure (14) et de l'unité de régulation de la pression de sortie (16), et qui sont reliées électriquement à l'unité de commande (24).

6. Système de mesure pour la mesure d'un flux selon la revendication 5,
**caractérisé en ce que**
le port de gaz inerte ou d'air comprimé (22) de l'unité de distribution (12) est relié à la barre de vannes (134) par une conduite de gaz inerte ou d'air comprimé (128) dans laquelle sont disposés un régulateur de pression de gaz inerte ou d'air (132) et un capteur de pression d'entrée (130).

7. Système de mesure pour la mesure d'un flux selon l'une des revendications 1 à 6,
**caractérisé en ce que**
l'unité de distribution (12) comprend un élément absorbant qui comprend une première vanne de commutation (32) dans la conduite principale (26) et une conduite de dérivation (34) par laquelle la première vanne de commutation (32) peut être contournée et dans laquelle sont disposées une deuxième vanne de commutation (36) et un étranglement (38).

8. Système de mesure pour la mesure d'un flux selon l'une des revendications 1 à 7,
**caractérisé en ce que**
l'unité de distribution (12) comprend un capteur de pression d'entrée (30) disposé dans la conduite principale (26), en fonction duquel un premier régulateur de pression de sortie (44), qui est disposé en amont du débitmètre (50) de l'unité de mesure (14) dans la conduite principale (26), est régulé.

9. Système de mesure pour la mesure d'un flux selon l'une des revendications 1 à 8,
**caractérisé en ce que**
l'unité de distribution (12) comprend une conduite d'alimentation en gaz de purge (92) qui mène d'un port de gaz de purge (20) à la conduite principale (26) et dans laquelle sont disposés une première vanne de gaz de purge (96), un premier clapet anti-retour (98) et un capteur de pression de gaz de purge (94).

10. Système de mesure pour la mesure d'un flux selon l'une des revendications 1 à 9,
**caractérisé en ce que**
l'unité de distribution (12) comprend une dérivation de gaz de purge de l'unité de distribution (100) qui bifurque de la conduite principale (26) en amont de l'unité de mesure (14) et débouche sur un premier port de sortie de gaz de purge (106), une deuxième vanne de gaz de purge (102) et un deuxième clapet anti-retour (104) étant disposés dans la dérivation de gaz de purge de l'unité de distribution (100).

11. Système de mesure pour la mesure d'un flux selon l'une des revendications 1 à 10,
**caractérisé en ce que**
l'unité de distribution (12) comprend un port de connexion (40) par lequel une unité supplémentaire peut être connectée dans la conduite principale (26) en amont de l'unité de mesure (14).

12. Système de mesure pour la mesure d'un flux selon l'une des revendications 1 à 11,
**caractérisé en ce que**
dans la conduite principale (26) de l'unité de mesure (14), un deuxième régulateur de pression de sortie (72), un premier appareil de mesure de Coriolis (52) et un deuxième appareil de mesure de Coriolis (54), qui est disposé en aval du premier appareil de mesure de Coriolis (52) dans la conduite principale (26), et peut être contourné par une conduite de dérivation (56) dans laquelle est disposée une vanne (58).

13. Système de mesure pour la mesure d'un flux selon la revendication 12,
**caractérisé en ce que**
le deuxième régulateur de pression de sortie (72) est situé en aval des deux appareils de mesure de Coriolis (52, 54) et peut être réglé sur une valeur de référence constante ou le long d'une courbe caractéristique de valeur de référence.

14. Système de mesure pour la mesure d'un flux selon l'une des revendications 12 ou 13,
**caractérisé en ce que**
la vanne (58) dans la conduite de dérivation (56) s'ouvre en fonction de la pression et le deuxième appareil de mesure à effet Coriolis (54) est conçu pour un débit maximal plus faible que le premier appareil de mesure Coriolis (52).

15. Système de mesure pour la mesure d'un flux selon la revendication 13 ou 14,
**caractérisé en ce que**
un capteur de pression unitaire de mesure (48) est placé entre le premier régulateur de pression de sortie (44) et le premier appareil de mesure Coriolis (52).

16. Système de mesure pour la mesure d'un flux selon la revendication 15,
**caractérisé en ce que**
une première conduite de gaz de purge d'unité de mesure (108) part du premier régulateur de pression de sortie (44) et une deuxième conduite de gaz de purge d'unité de mesure (110) part du deuxième régulateur de pression de sortie (72), qui mènent au port de sortie de gaz de purge (106) via un troisième clapet anti-retour (112).

17. Système de mesure pour la mesure d'un flux selon la revendication 15 ou 16,
**caractérisé en ce que**
en aval du deuxième appareil de mesure de Coriolis (54) et en amont du deuxième régulateur de pression de sortie (72), un port de connexion (68) est formé, par lequel une unité de calibrage peut être connectée dans la conduite principale (26).

18. Système de mesure pour la mesure d'un flux selon l'une des revendications 1 à 17,
**caractérisé en ce que**
de la conduite principale (26) de l'unité de régulation de la pression de sortie (16) part une première conduite de gaz de purge de l'unité de régulation de la pression de sortie (114) en amont du capteur de pression de sortie (86) et une deuxième conduite de gaz de purge de l'unité de régulation de la pression de sortie (122) en aval ou au niveau du capteur de pression de sortie (86), dans chacune desquelles est disposée une vanne de commutation (116, 124) et qui conduisent à un deuxième port de sortie de gaz de purge (120) via un clapet anti-retour (118, 126).

19. Système de mesure pour la mesure d'un flux selon l'une des revendications 1 à 18,
**caractérisé en ce que**
un capteur de température (84) est placé dans la conduite principale (26) de l'unité de régulation de la pression de sortie (16).

20. Système de mesure pour la mesure d'un flux selon l'une des revendications 1 à 19,
**caractérisé en ce que**
l'unité de régulation de la pression de sortie (16) comprend un raccord de connexion (82) par lequel une unité de simulation du volume de la conduite peut être connectée dans la conduite principale (26).
